# EUROPÄISCHE PATENTSCHRIFT

(11) **EP 2 134 775 B1**
(45) Veröffentlichungstag und Bekanntmachung des Hinweises auf die Patenterteilung: **23.06.2010**
(21) Anmeldenummer: 08717377.9
(22) Anmeldetag: 04.03.2008
(51) Int. Cl.: C08J 9/42

(54) **MIT HYDROPHOBINEN MODIFIZIERTE OFFENZELLIGE SCHAUMSTOFFE**
OPEN-CELL FOAM MODIFIED WITH HYDROPHOBINES
MOUSSES À CELLULES OUVERTES MODIFIÉES AVEC DES HYDROPHOBINES

(30) Priorität: 06.03.2007 EP 07103547
(43) Veröffentlichungstag der Anmeldung: 23.12.2009
(73) Patentinhaber: BASF SE, 67056 Ludwigshafen (DE)
(72) Erfinder: BAUS, Ulf, 69221 Dossenheim (DE); MONTAG, Thorsten, 67373 Dudenhofen (DE); BOLLSCHWEILER, Claus, 69118 Heidelberg (DE); SUBKOWSKI, Thomas, 68526 Ladenburg (DE); KAROS, Marvin, 68723 Schwetzingen (DE); ALTEHELD, Armin, 55543 Bad Kreuznach (DE); QUADBECK-SEEGER, Hans-Jürgen, 67098 Bad Dürkheim (DE); VATH, Bernhard, 68259 Mannheim (DE)
(86) Internationale Anmeldenummer: PCT/EP2008/052619
(87) Internationale Veröffentlichungsnummer: WO 2008/107439

(56) Entgegenhaltungen:
- WO-A-2006/131555
- WO-A-2007/006765
- WO-A-2007/082784
- US-A1- 2006 194 893

## Beschreibung

Die vorliegende Erfindung betrifft einen offenzelligen Schaumstoff auf Basis eines Melamin-Formaldehyd-Kondensationsproduktes, eines Polyurethans oder eines Polyimids, welcher mit Hydrophobinen modifiziert ist, ein Verfahren zur Herstellung derartiger Schaumstoffe sowie deren Verwendung zum Aufnehmen organischer Flüssigkeiten, als Leckage- und Auslaufschutz für Flüssigkeitsspeicher und zur Flüssig-Flüssig-Trennung.

Offenzellige, elastische Schaumstoffe auf Basis von Melamin-Formaldehyd-Harzen, Polyurethanen oder Polyimiden sind prinzipiell bekannt. Beispielhaft sei auf "Foamed Plastics" insbesondere Abschnitt "4.6 Foams from Melamine-Formaldehyde (MF) Resins" und "4.9 Polyimide (PI) Foams" sowie "Polyurethanes - 7.1 Flexible Foams", jeweils in Ullmann's Encyclopedia of Industrial Chemistry, 7th Edtition 2006, Electronic Release, Wiley-VCH, Weinheim, New York 2006, verwiesen. Herstellverfahren für derartige Schaumstoffe auf Basis von Melamin-Formaldehyd-Harzen sind beispielsweise in EP-A 17 672 EP-A 37 470 oder WO 01/94436 offenbart.

Offenzellige, elastische Schaumstoffe auf Basis von Melamin-Formaldehyd-Harzen zeichnen sich durch eine vergleichsweise niedrige Dichte, schwere Entflammbarkeit sowie eine hohe Wärme- und Kältebeständigkeit aus. Sie eignen sich insbesondere zur thermischen Isolierung von Gebäuden, Fahrzeugen, Rohrleitungen oder Tanks, zur Schallisolierung sowie als isolierendes und stoßdämmendes Verpackungsmaterial.

Unbehandelte Melamin-Formaldehyd-Schaumstoffe nehmen sowohl hydrophile als auch hydrophobe Flüssigkeiten sehr schnell auf. Die Aufnahme von Wasser kann sich hierbei negativ auf die Eigenschaften auswirken, beispielsweise in einer Erhöhung der Dichte oder einer Verschlechterung der thermischen Isolierwirkung.

DE-A 100 11 388 offenbart einen offenzelligen Melaminharz-Schaumstoff, dessen Zellgerüst mit einem Fluoralkylester beschichtet ist. Dadurch werden sowohl die Wasser-, wie auch die Ölaufnahmefähigkeit des Melaminharz-Schaumstoffes vermindert.

Aus EP-A 633 283 ist bekannt, die Wasseraufnahme von Melamin-Formaldehyd-Schaumstoffen durch Beschichtung des Schaumstoff-Gerüstes mit einem hydrophoben Material, insbesondere mit einer wässrigen Emulsion eines Silikonharzes zu reduzieren. In den Beispielen wird ein Schaumstoff mit einer scheinbaren Dichte von 11 kg/m³ eingesetzt, der in einem zusätzlichen Arbeitsschritt mit einem hydrophob wirkenden Mittel beschichtet wird und nach der Behandlung scheinbare Dichten zwischen 72 kg/m³ und 120 kg/m³ aufweist. Die höhere Dichte ist bei gewichtssensiblen Anwendungen, wie beispielsweise Anwendungen im Fahrzeugbau sowie insbesondere AnWendungen im Flugzeugbau und in der Weltraumfahrt, äußerst nachteilig.

Hydrophobine sind kleine Proteine von etwa 100 bis 150 Aminosäuren, welche in filamentösen Pilzen, beispielsweise Schizophyllum commune, vorkommen. Sie weisen in aller Regel 8 Cystein-Einheiten auf. Hydrophobine können aus natürlichen Quellen isoliert werden, können aber auch mittels gentechnischer Verfahren gewonnen werden, wie beispielsweise von WO 2006/082251 oder WO 2006/131564 offenbart.

Im Stand der Technik ist die Verwendung von Hydrophobinen für verschiedene Anwendungen vorgeschlagen worden.

WO 96/41882 schlägt die Verwendung von Hydrophobinen als Emulgatoren, Verdicker, oberflächenaktive Substanzen, zum Hydrophilieren hydrophober Oberflächen, zur Verbesserung der Wasserbeständigkeit hydrophiler Substrate, zur Herstellung von Öl-in-Wasser-Emulsionen oder von Wasser-in-Öl-Emulsionen vor. Weiterhin werden pharmazeutische Anwendungen wie die Herstellung von Salben oder Cremes sowie kosmetische Anwendungen wie Hautschutz oder die Herstellung von Haarshampoos oder Haarspülungen vorgeschlagen. EP 1 252 516 offenbart die Beschichtung verschiedener Substrate mit einer Hydrophobine enthaltenden Lösung bei einer Temperatur von 30 bis 80°C. Weiterhin wurde beispielsweise die Verwendung als Demulgator (WO 2006/103251), als Verdunstungsverzögerer (WO 2006/128877) oder Verschmutzungsinhibitor (WO 2006/103215) vorgeschlagen.

Die Verwendung von Hydrophobinen zur Modifizierung von offenzelligen Schaumstoffen auf Basis von Melamin-Formaldehyd-Kondensationsprodukten, Polyurethanen oder eines Polyimiden ist bislang noch nicht bekannt.

Aufgabe der Erfindung war es, einen modifizierten, offenzelligen Schaumstoff auf Basis von Melamin-Formaldehyd-Kondensationsprodukten, Polyurethanen oder Polyimiden mit einem neuartigen Eigenschaftprofil bereitzustellen.

Dementsprechend wurde ein offenzelliger Schaumstoff auf Basis eines Melamin-Formaldehyd-Kondensationsproduktes gefunden, der mit mindestens einem Hydrophobin modifiziert ist.

Weiterhin wurde ein Verfahren zur Herstellung eines derartigen Schaumstoffes gefunden, bei dem man einen unmodifizierten, offenzelligen Schaumstoff auf Basis eines Melamin-Formaldehyd-Kondensationsproduktes, eines Polyurethans oder eines Polyimids mit einer wässrigen Lösung eines Hydrophobins behandelt.

Es wurde ein weiteres Herstellverfahren gefunden, bei dem man die Herstellung des offenzelligen Schaumstoffes in Gegenwart mindestens eines Hydrophobins vornimmt.

Schließlich wurde die Verwendung derartiger modifizierter Schaumstoffe für verschiedene Zwecke, insbesondere zur Schall- und Wärmeisolierung sowie zur Abtrennung organischer Phasen aus Emulsionen oder Mischungen mit Wasser.

### Zu der Erfindung ist im Einzelnen das Folgende auszuführen:

Unter dem Begriff "Hydrophobine" im Sinne der vorliegenden Erfindung sollen im Folgenden Polypeptide der allgemeinen Strukturformel (I)

Xₙ-C¹-X₁₋₅₀-C²-X₀₋₅-C³-X₁₋₁₀₀-C⁴-X₁₋₁₀₀-C⁵-X₁₋₅₀-C⁶-X₀₋₅-C⁷-X₁₋₅₀-C⁸-Xₘ (I)

verstanden werden, wobei X für jede der 20 natürlich vorkommenden Aminosäuren (Phe, Leu, Ser, Tyr, Cys, Trp, Pro, His, Gln, Arg, Ile Met, Thr, Asn, Lys, Val, Ala, Asp, Glu, Gly) stehen kann. Dabei können die Reste X jeweils gleich oder verschieden sein. Hierbei stellen die bei X stehenden Indizes jeweils die Anzahl der Aminosäuren in der jeweiligen Teilsequenz X dar, C steht für Cystein, Alanin, Serin, Glycin, Methionin oder Threonin, wobei mindestens vier der mit C benannten Reste für Cystein stehen, und die Indizes n und m stehen unabhängig voneinander für natürliche Zahlen zwischen 0 und 500, bevorzugt zwischen 15 und 300.

Die Polypetide gemäß der Formel (I) sind weiterhin durch die Eigenschaft charakterisiert, dass sie bei Raumtemperatur nach Beschichten einer Glasoberfläche eine Vergrößerung des Kontaktwinkels eines Wassertropfens von mindestens 20°, bevorzugt mindestens 25° und besonders bevorzugt 30° bewirken, jeweils verglichen mit dem Kontaktwinkel eines gleich großen Wassertropfens mit der unbeschichteten Glasoberfläche.

Die mit C¹ bis C⁸ benannten Aminosäuren sind bevorzugt Cysteine; sie können aber auch durch andere Aminosäuren ähnlicher Raumerfüllung, bevorzugt durch Alanin, Serin, Threonin, Methionin oder Glycin ersetzt werden. Allerdings sollen mindestens vier, bevorzugt mindestens 5, besonders bevorzugt mindestens 6 und insbesondere mindestens 7 der Positionen C¹ bis C⁸ aus Cysteinen bestehen. Cysteine können in den erfindungsgemäßen Proteinen entweder reduziert vorliegen oder miteinander Disulfidbrücken ausbilden. Besonders bevorzugt ist die intramolekulare Ausbildung von C-C Brücken, insbesondere die mit mindestens einer, bevorzugt 2, besonders bevorzugt 3 und ganz besonders bevorzugt 4 intramolekularen Disulfidbrücken. Bei dem oben beschriebenen Austausch von Cysteinen durch Aminosäuren ähnlicher Raumerfüllung werden vorteilhaft solche C-Positionen paarweise ausgetauscht, die intramolekulare Disulfidbrücken untereinander ausbilden können.

Falls in den mit X bezeichneten Positionen auch Cysteine, Serine, Alanine, Glycine, Methionine oder Threonine verwendet werden, kann sich die Nummerierung der einzelnen C-Positionen in den allgemeinen Formeln entsprechend verändern.

Bevorzugt werden Hydrophobine der allgemeinen Formel (II)

Xₙ-C¹-X₃₋₂₅-C²-X₀₋₂-C³-X₅₋₅₀-C⁴-X₂₋₃₅-C⁵-X₂₋₁₅-C⁶-X₀₋₂-C⁷-X₃₋₃₅-C⁸-Xₘ (II)

zur Ausführung der vorliegenden Erfindung eingesetzt, wobei X, C und die bei X und C stehenden Indizes die obige Bedeutung haben, die Indizes n und m für Zahlen zwischen 0 und 350, bevorzugt 15 bis 300 stehen, sich die Proteine weiterhin durch die oben erwähnte Kontaktwinkeländerung auszeichnen, und es sich weiterhin bei mindestens 6 der mit C benannten Reste um Cystein handelt. Besonders bevorzugt handelt es sich bei allen Resten C um Cystein.

Besonders bevorzugt werden Hydrophobine der allgemeinen Formel (III)

Xₙ-C¹-X₅₋₉-C²-C³-X₁₁₋₃₉-C⁴-X₂₋₂₃-C⁵-X₅₋₉-C⁶-C⁷-X₆₋₁₈-C⁸-Xₘ (III)

eingesetzt, wobei X, C und die bei X stehenden Indizes die obige Bedeutung haben, die Indizes n und m für Zahlen zwischen 0 und 200 stehen, sich die Proteine weiterhin durch die oben erwähnte Kontaktwinkeländerung auszeichnen, und es sich bei mindestens 6 der mit C benannten Reste um Cystein handelt. Besonders bevorzugt handelt es sich bei allen Resten C um Cystein.

Bei den Resten Xₙ und Xₘ kann es sich um Peptidsequenzen handeln, die natürlicherweise auch mit einem Hydrophobin verknüpft sind. Es kann sich aber auch bei einem oder bei beiden Resten um Peptidsequenzen handeln, die natürlicherweise nicht mit einem Hydrophobin verknüpft sind. Darunter sind auch solche Reste Xₙ und/oder Xₘ zu verstehen, bei denen eine natürlicherweise in einem Hydrophobin vorkommende Peptidsequenz durch eine nicht natürlicherweise in einem Hydrophobin vorkommende Peptidsequenz verlängert ist.

Falls es sich bei Xₙ und/oder Xₘ um natürlicherweise nicht mit Hydrophobinen verknüpfte Peptidsequenzen handelt, sind derartige Sequenzen in der Regel mindestens 20, bevorzugt mindestens 35 Aminosäuren lang. Es kann sich beispielsweise um Sequenzen aus 20 bis 500, bevorzugt 30 bis 400 und besonders bevorzugt 35 bis 100 Aminosäuren handeln. Ein derartiger, natürlicherweise nicht mit einem Hydrophobin verknüpfter Rest soll im Folgenden auch als Fusionspartner bezeichnet werden. Damit soll ausgedrückt werden, dass die Proteine aus mindestens einem Hydrophobinteil und einem Fusionspartnerteil bestehen können, die in der Natur nicht zusammen in dieser Form vorkommen. Fusions-Hydrophobine aus Fusionspartner und Hydrophobinteil sind beispielsweise in WO 2006/082251, WO 2006/082253 und WO 2006/131564 offenbart worden.

Der Fusionspartnerteil kann aus einer Vielzahl von Proteinen ausgewählt werden. Es kann nur ein einziger Fusionspartner mit dem Hydrophobinteil verknüpft sein, oder es können auch mehrere Fusionspartner mit einem Hydrophobinteil verknüpft werden, beispielsweise am Aminoterminus (Xₙ) und am Carboxyterminus (Xₘ) des Hydrophobinteils. Es können aber auch beispielsweise zwei Fusionspartner mit einer Position (Xₙ oder Xₘ) des erfindungsgemäßen Proteins verknüpft werden.

Besonders geeignete Fusionspartner sind Proteine, die natürlicherweise in Mikroorganismen, insbesondere in E. coli oder Bacillus subtilis vorkommen. Beispiele für solche Fusionspartner sind die Sequenzen yaad (SEQ ID NO: 16 in WO 2006/082251), yaae (SEQ ID NO:18 in WO 2006/082251), Ubiquitin und Thioredoxin. Gut geeignet sind auch Fragmente oder Derivate dieser genannten Sequenzen, die nur einen Teil, beispielsweise 70 bis 99 %, bevorzugt 5 bis 50 %, und besonders bevorzugt 10 bis 40 % der genannten Sequenzen umfassen, oder bei denen einzelne Aminosäuren, bzw. Nukleotide gegenüber der genannten Sequenz verändert sind, wobei sich die Prozentangaben jeweils auf die Anzahl der Aminosäuren bezieht.

In einer weiterhin bevorzugten Ausführungsform weist das Fusion-Hydrophobin neben dem genannten Fusionspartner als eine der Gruppen Xₙ oder Xₘ oder als terminaler Bestandteil einer solchen Gruppe noch eine sogenannte Affinitätsdomäne (affinity tag / affinity tail) auf. Hierbei handelt es sich in prinzipiell bekannter Art und Weise um Ankergruppen, welche mit bestimmten komplementären Gruppen wechselwirken können und der leichteren Aufarbeitung und Reinigung der Proteine dienen können. Beispiele derartiger Affinitätsdomänen umfassen (His)ₖ- , (Arg)ₖ-, (Asp)ₖ-, (Phe)ₖ- oder (Cys)ₖ-Gruppen, wobei k im allgemeinen für eine natürliche Zahl von 1 bis 10 steht. Bevorzugt kann es sich um eine (His)ₖ-Gruppe handeln, wobei k für 4 bis 6 steht. Hierbei kann die Gruppe Xₙ und/oder Xₘ ausschließlich aus einer derartigen Affinitätsdomäne bestehen oder aber ein natürlicherweise oder nicht natürlicherweise mit einem Hydrophobin verknüpfter Rest Xₙ bzw. Xₘ wird um eine terminal angeordnete Affinitätsdomäne verlängert.

Die erfindungsgemäß verwendeten Hydrophobine können auch noch in ihrer Polypeptidsequenz modifiziert sein, beispielsweise durch Glycosilierung, Acetylierung oder auch durch chemische Quervernetzung beispielsweise mit Glutardialdehyd.

Eine Eigenschaft der erfindungsgemäß verwendeten Hydrophobine bzw. deren Derivaten ist die Änderung von Oberflächeneigenschaften, wenn die Oberflächen mit den Proteinen beschichtet werden. Die Änderung der Oberflächeneigenschaften lässt sich experimentell beispielsweise dadurch bestimmen, dass der Kontaktwinkel eines Wassertropfens vor und nach der Beschichtung der Oberfläche mit dem Protein gemessen wird und die Differenz der beiden Messungen ermittelt wird.

Die Durchführung von Kontaktwinkelmessungen ist dem Fachmann prinzipiell bekannt. Die Messungen beziehen sich auf Raumtemperatur sowie Wassertropfen von 5 µl und die Verwendung von Glasplättchen als Substrat. Die genauen experimentellen Bedingungen für eine beispielhaft geeignete Methode zur Messung des Kontaktwinkels sind im experimentellen Teil dargestellt. Unter den dort genannten Bedingungen besitzen die erfindungsgemäß verwendeten Fusionsproteine die Eigenschaft, den Kontaktwinkel um mindestens 20°, bevorzugt mindestens 25°, besonders bevorzugt mindestens 30° zu vergrößern, jeweils verglichen mit dem Kontaktwinkel eines gleich großen Wassertropfens mit der unbeschichteten Glasoberfläche.

Besonders bevorzugte Hydrophobine zur Ausführung der vorliegenden Erfindung sind die Hydrophobine des Typs dewA, rodA, hypA, hypB, sc3, basf1, basf2. Diese Hydrophobine inklusive ihrer Sequenzen sind beispielsweise in WO 2006/82251 offenbart. Sofern nicht anders angegeben, beziehen sich die nachfolgend angegebenen Sequenzen auf in WO 2006/82251 offenbarten Sequenzen. Eine Übersichtstabelle mit den SEQ-ID-Nummern befindet sich in WO 2006/82251 auf Seite 20.

Erfindungsgemäß insbesondere geeignet sind die Fusionsproteine yaad-Xa-dewA-his (SEQ ID NO: 20), yaad-Xa-rodA-his (SEQ ID NO: 22) oder yaad-Xa-basf1-his (SEQ ID NO: 24) mit den in Klammern angegebenen Polypeptidsequenzen sowie den dafür codierenden Nukleinsäuresequenzen, insbesondere den Sequenzen gemäß SEQ ID NO: 19, 21, 23. Besonders bevorzugt kann yaad-Xa-dewA-his (SEQ ID NO: 20) eingesetzt werden. Auch Proteine, die sich ausgehend von den in SEQ ID NO. 20, 22 oder 24 dargestellten Polypeptidsequenzen durch Austausch, Insertion oder Deletion von mindestens einer, bis hin zu 10, bevorzugt 5, besonders bevorzugt 5% aller Aminosäuren ergeben, und die die biologische Eigenschaft der Ausgangsproteine noch zu mindestens 50% besitzen, sind besonders bevorzugte Ausführungsformen. Unter biologischer Eigenschaft der Proteine wird hierbei die bereits beschriebene Änderung des Kontaktwinkels um mindestens 20° verstanden.

Besonders zur Ausführung der vorliegenden Erfindung geeignete Derivate sind von yaad-Xa-dewA-his (SEQ ID NO: 20), yaad-Xa-rodA-his (SEQ ID NO: 22) oder yaad-Xa-basf1-his (SEQ ID NO: 24) durch Verkürzung des yaad-Fusionspartners abgeleitete Derivate. Anstelle des vollständigen yaad-Fusionspartners (SEQ ID NO: 16) mit 294 Aminosäuren kann vorteilhaft ein verkürzter yaad-Rest eingesetzt werden. Der verkürzte Rest sollte aber zumindest 20, bevorzugt mindestens 35 Aminosäuren umfassen. Beispielsweise kann ein verkürzter Rest mit 20 bis 293, bevorzugt 25 bis 250, besonders bevorzugt 35 bis 150 und beispielsweise 35 bis 100 Aminosäuren eingesetzt werden. Ein Beispiel für ein derartiges Protein ist yaad40-Xa-dewA-his (SEQ ID NO: 26 in PCT/EP2006/064720), welches einen auf 40 Aminosäuren verkürzten yaad-Rest aufweist.

Eine Spaltstelle zwischen dem Hydrophobin und dem Fusionspartner bzw. den Fusionspartnern kann dazu genutzt werden, den Fusionspartner abzuspalten und das reine Hydrophobin in underivatisierter Form freizusetzen (beispielsweise durch BrCN-Spaltung an Methionin, Faktor Xa-, Enterokinase-, Thrombin-, TEV-Spaltung etc.).

Die erfindungsgemäß zur Modifizierung offenzelliger Schaumstoffe verwendeten Hydrophobine lassen sich chemisch durch bekannte Verfahren der Peptidsynthese, wie beispielsweise durch Festphasensynthese nach Merrifield herstellen.

Natürlich vorkommende Hydrophobine lassen sich aus natürlichen Quellen mittels geeigneter Methoden isolieren. Beispielhaft sei auf Wösten et. al., Eur. J Cell Bio. 63, 122-129 (1994) oder WO 96/41882 verwiesen.

Ein gentechnisches Herstellverfahren für Hydrophobine ohne Fusionspartner aus Talaromyces thermophilus ist von US 2006/0040349 beschrieben.

Die Herstellung von Fusionsproteinen kann bevorzugt durch gentechnische Verfahren erfolgen, bei denen eine für den Fusionspartner und eine für den Hydrophobinteil codierende Nukleinsäuresequenz, insbesondere DNA-Sequenz, so kombiniert werden, dass in einem Wirtsorganismus durch Genexpression der kombinierten Nukleinsäuresequenz das gewünschte Protein erzeugt wird. Ein derartiges Herstellverfahren beispielsweise ist von WO 2006/082251 oder WO 2006/082253 offenbart. Die Fusionspartner erleichtern die Herstellung der Hydrophobine erheblich. Fusions-Hydrophobine werden bei den gentechnischen Verfahren mit deutlich besseren Ausbeuten produziert als Hydrophobine ohne Fusionspartner.

Die nach dem gentechnischen Verfahren von den Wirtsorganismen produzierten Fusions-Hydrophobine können in prinzipiell bekannter Art und Weise aufgearbeitet und mittels bekannter chromatographischer Methoden gereinigt werden.

In einer bevorzugten Ausführungsform kann das in WO 2006/082253, Seiten 11/12 offenbarte, vereinfachte Aufarbeitungs- und Reinigungsverfahren eingesetzt werden. Hierzu werden die fermentierten Zellen zunächst aus der Fermetationsbrühe abgetrennt, aufgeschlossen und die Zelltrümmer von den Einschlusskörpern (inclusion bodies) getrennt. Letzteres kann vorteilhaft durch Zentrifugieren erfolgen. Schließlich können die Einschlusskörper, beispielsweise durch Säuren, Basen und/oder Detergentien in prinzipiell bekannter Art und Weise aufgeschlossen werden, um die Fusions-Hydrophobine freizusetzen. Die Einschlusskörper mit den erfindungsgemäß verwendeten Fusion-Hydrophobinen können in der Regel schon unter Verwendung von 0,1 m NaOH innerhalb von ca. 1 h vollständig gelöst werden.

Die erhaltenen Lösungen können -ggf. nach Einstellen des gewünschten pH-Wertesohne weitere Reinigung zur Ausführung dieser Erfindung eingesetzt werden. Die Fusions-Hydrophobine können aus den Lösungen aber auch als Feststoff isoliert werden. Bevorzugt kann die Isolierung mittels Sprühgranulieren oder Sprühtrocknen erfolgen, wie in WO 2006/082253, Seite 12 beschrieben. Die nach dem vereinfachten Aufarbeitungs- und Reinigungsverfahren erhaltenen Produkte umfassen neben Resten von Zelltrümmern in der Regel ca. 80 bis 90 Gew. % Proteine. Die Menge an Fusions-Hydrophobinen beträgt je nach Fusionskonstrukt und Fermentationsbedingungen in der Regel 30 bis 80 Gew. % bezüglich der Menge aller Proteine.

Die isolierten, Fusions-Hydrophobine enthaltenden Produkte können als Feststoffe gelagert werden und zum Einsatz in den jeweils gewünschten Medien gelöst werden.

Die Fusions-Hydrophobine können als solche oder auch nach Abspaltung und Abtrennung des Fusionspartners als "reine" Hydrophobine zur Ausführung dieser Erfindung verwendet werden. Eine Spaltung nimmt man vorteilhaft nach der Isolierung der Einschlusskörper und deren Auflösung vor.

Erfindungsgemäß werden die Hydrophobine zur Modifizierung von offenzelligen Schaumstoffen verwendet.

In einer bevorzugten Ausführungsform der Erfindung handelt es sich hierbei um offenzellige Schaumstoffe auf Basis von Melamin-Formaldehyd-Harzen.

In einer ersten Ausführungsform der Erfindung können die modifizierten Schaumstoffe erhalten werden, indem man unmodifizierte, offenzellige Schaumstoffe einsetzt und mit Hydrophobinen behandelt.

Herstellverfahren für unmodifizierte Schaumstoffe auf Basis von Polyurethanen sind beispielsweise aus WO 2005/103107 oder WO 2006/008054 bekannt.

Herstellverfahren für unmodifizierte Schaumstoffe auf Basis von Melamin-Formaldehyd-Harzen sind beispielsweise in EP-A 17 672, EP-A 37 470 sowie WO 01/94436 offenbart. Hiernach wird eine Mischung eines in einem wässrigen Medium gelösten oder dispergierten Melamin-Formaldehyd-Vorkondensates, eines Treibmittels, eines Dispergiermittels sowie eines Härters erwärmt, verschäumt und ausgehärtet. Das Erwärmen kann beispielsweise mithilfe von Heißluft, Wasserdampf oder Mikrowellenbetrahlung vorgenommen werden. Die Konzentration des Melamin/Formaldehyd-Vorkondensates in der Mischung beträgt in der Regel 55 und 85 Gew. %, bevorzugt zwischen 63 und 80 Gew.%.

Die Rohdichte des als Ausgangsmaterial eingesetzten, offenzelligen Schaumstoffes auf Basis von Melamin-Formaldehyd-Harzen liegt in der Regel im Bereich von 3 bis 100 kg/m³, bevorzugt im Bereich von 5 bis 20 kg/m³. Der Begriff "Rohdichte" bezeichnet in prinzipiell bekannter Art und Weise die Dichte des Schaustoffes inklusive des Porenvolumens. Die Zellzahl liegt üblicherweise im Bereich von 50 bis 300 Zellen/25 mm. Die durchschnittliche Porengröße liegt üblicherweise im Bereich von 100 bis 250 µm. Die Zugfestigkeit liegt bevorzugt im Bereich von 100 bis 150 kPa und die Bruchdehnung im Bereich von 8 bis 20%.

Zur Behandlung des unmodifizierten, offenzelligen Schaumstoffes wird eine Formulierung eingesetzt, welche mindestens Wasser oder wässriges Lösemittelgemisch sowie ein Hydrophobin umfasst.

Geeignete wässrige Lösemittelgemische umfassen Wasser sowie eines oder mehrere, mit Wasser mischbare Lösemittel. Die Auswahl derartiger Komponenten ist nur insofern beschränkt, als die Hydrophobine und die anderen Komponenten im Gemisch in ausreichendem Maße löslich sein müssen. Im Regelfalle umfassen derartige Gemische zumindest 50 Gew. %, bevorzugt mindestens 65 Gew. % und besonders bevorzugt mindestens 80 Gew. % Wasser. Ganz besonders bevorzugt wird nur Wasser eingesetzt. Der Fachmann trifft unter den mit Wasser mischbaren Lösemitteln je nach den gewünschten Eigenschaften der Formulierung eine geeignete Auswahl. Beispiele geeigneter, mit Wasser mischbarer Lösemittel umfassen Monoalkohole wie Methanol, Ethanol oder Propanol, höhere Alkohole wie Ethylenglykol oder Polyetherpolyole sowie Etheralkohole wie Butylglykol oder Methoxypropanol.

Bevorzugt weist die zur Behandlung eingesetzte Formulierung einen pH-Wert ≥ 4, bevorzugt ≥ 6 und besonders bevorzugt ≥ 7 auf. Insbesondere liegt der pH-Wert im Bereich von 4 bis 11, bevorzugt 6 bis 10, besonders bevorzugt 7 bis 9,5 und ganz besonders bevorzugt 7,5 bis 9. Beispielsweise kann der pH-Wert 7,5 bis 8,5 oder 8,5 bis 9 betragen.

Zur Einstellung des pH-Wertes umfasst die Formulierung bevorzugt einen geeigneten Puffer. Der Fachmann wählt je nach dem zur Beschichtung vorgesehenen pH-Bereich einen geeigneten Puffer. Zu nennen sind beispielsweise Kaliumdihydrogenphosphat-Puffer, Tris(hydroxymethyl)aminomethan-Puffer (Tris-Puffer), Borax-Puffer, Natriumhydrogencarbonat-Puffer oder Natriumhydrogenphosphat-Puffer. Bevorzugt ist Tris-Puffer.

Die Konzentration des Puffers in der Lösung wird vom Fachmann je nach den gewünschten Eigenschaften der Formulierung bestimmt. Der Fachmann wird in der Regel auf eine ausreichende Pufferkapazität achten, um möglichst konstante Beschichtungsbedingungen zu erreichen. Bewährt hat sich eine Konzentration von 0,001 mol/l bis 1 mol/l, bevorzugt 0,005 mol/l bis 0,1 mol/l und besonders bevorzugt 0,01 mol/l bis 0,05 mol/l.

Weiterhin umfasst die Formulierung mindestens ein Hydrophobin. Selbstverständlich können auch Gemische verschiedener Hydrophobine eingesetzt werden. In bevorzugten Ausführungsform der Erfindung können als Hydrophobine die oben erwähnten Fusions-Hydrophobine eingesetzt werden. Beispielsweise kann yaad-Xa-dewA-his (SEQ ID NO: 20) eingesetzt werden, sowie insbesondere Produkte mit verkürztem yaad-Rest, wie beispielsweise yaad40-Xa-dewA-his. Vorteilhaft können die nach dem oben beschriebenen, vereinfachten Reinigungsverfahren hergestellten Produkte eingesetzt werden.

Die Konzentration der Hydrophobine in der Lösung wird vom Fachmann je nach den gewünschten Eigenschaften der Beschichtung gewählt. Mit höheren Konzentrationen lässt sich in der Regel eine schnellere Beschichtung erreichen. Bewährt hat sich im Regelfalle eine Konzentration von 0,1 µg/ml bis 1000 µg/ml, bevorzugt 1µg/ml bis 500 µg/ml, besonders bevorzugt 10 µg/ml bis 250 µg/ml, ganz besonders bevorzugt 30 µg/ml bis 200 µg/ml und beispielsweise 50 bis 100 µg/ml.

Die eingesetzte Formulierung kann darüber hinaus optional weitere Komponenten bzw. Additive umfassen.

Beispiele zusätzlicher Komponenten umfassen Tenside. Geeignete Tenside sind beispielsweise nichtionische Tenside, welche Polyalkoxygruppen, insbesondere Polyethylenoxidgruppen umfassen. Beispiele umfassen Polyoxyethylenstearate, alkoxylierte Phenole und dergleichen. Weitere Beispiele geeigneter Tenside umfassen Polyethyleneglycol(20)sorbitanmonolaurat (Tween® 20), Polyethyleneglycol(20)sorbitanmonopalmitat (Tween® 40), Polyethyleneglycol(20)sorbitanmonostearat (Tween® 60), Polyethyleneglycol(20)sorbitanmonooleat (Tween® 80), Cyclohexyl-methyl-β D-Maltosid, Cyclohexyl-ethyl-β D-Maltosid, Cyclohexyl-n-hexyl-β D-Maltosid, n-Undecyl-β D-Maltosid, n-Octyl-β D-Maltopyranosid, n-Octyl-β D-Glucopyranosid, n-Octyl-α D-Glucopyranosid, n-Dodecanoylsucrose. Weitere Tenside sind beispielsweise in WO 2005/68087 Seite 9, Zeile 10 bis Seite 10, Zeile 2 offenbart. Die Konzentration an Tensiden beträgt in der Regel 0,001 Gew. % bis 0,5 Gew. %, bevorzugt 0,01 Gew. % bis 0,25 Gew. %und besonders bevorzugt 0,1Gew. % bis 0,2% Gew. %, jeweils bezogen auf die Menge aller Komponenten der Formulierung.

Weiterhin können der Formulierung noch Metallionen, insbesondere zweiwertige Metallionen zugegeben werden. Metallionen können zu einer gleichmäßigeren Beschichtung beitragen. Beispiele geeigneter zweiwertiger Metallionen umfassen, beispielsweise Erdalkalimetallionen wie Ca²⁺-Ionen. Derartige Metallionen können bevorzugt als in der Formulierung lösliche Salze zugegeben werden, beispielsweise in Form von Chloriden, Nitraten oder Carbonat, Acetat, Citrat, Gluconat, Hydroxid, Lactat, Sulfat, Succinat, Tartrat. Beispielsweise können CaCl₂ oder MgCl₂ zugegeben werden. Die Löslichkeit kann optional auch durch geeignete Hilfsmittel, beispielsweise Komplexbildner gesteigert werden. Falls vorhanden, beträgt die Konzentration derartiger Metallionen in der Regel 0,01 mmol/l bis 10 mmol/l, bevorzugt 0,1 mmol/l bis 5 mmol/l und besonders bevorzugt 0,5 mmol/l bis 2 mmol/l.

Die Formulierungen können erhalten werden, indem die oben beschriebenen Lösungen aus der Aufarbeitung mit den gewünschten zusätzlichen Komponenten mischt und auf die gewünschte Konzentration verdünnt. Selbstverständlich können die Formulierungen auf erhalten werden, indem man isolierte, feste Hydrophobine entsprechend löst.

Erfindungsgemäß wird derunmodifizierte, offenzellige Schaumstoff mit der Hydrophobine enthaltenden Formulierung behandelt. Um eine gleichmäßige Modifizierung der gesamten inneren Oberfläche des Schaumstoffes zu gewährleisten, sollte der Schaumstoff möglichst vollständig mit der Formulierung getränkt werden. Die Behandlung kann insbesondere vorgenommen werden, indem man den Schaumstoff in die Formulierung eintaucht, mit der Formulierung besprüht oder mit der Formulierung begießt.

In der Regel ist eine gewisse Einwirkzeit erforderlich, um die Fusions-Hydrophobine auf der Oberfläche abzuscheiden. Der Fachmann wählt je nach dem gewünschten Ergebnis eine geeignete Einwirkzeit. Beispiele typischer Einwirkzeiten liegen bei 0,1 bis 12 h, ohne dass die Erfindung hierauf beschränkt sein soll.

Im Regelfalle ist die Einwirkzeit von der Temperatur sowie von der Konzentration des Hydrophobins in der Lösung abhängig. Je höher die Temperatur und je höher die Konzentration im Zuge des Beschichtungsvorganges, desto kürzer kann die Einwirkzeit sein. Die Temperatur im Zuge des Beschichtungsvorganges kann bei Raumtemperatur liegen oder aber es kann sich um erhöhte Temperaturen handeln. Beispielsweise kann es sich um Temperaturen von 5, 10, 20, 30, 40, 50, 60, 70, 80, 90, 100, 110, oder 120°C handeln. Bevorzugt handelt es sich um Temperaturen von 15 bis 120°C, besonders bevorzugt 20 bis 100°C, und beispielsweise 40 bis 100°C oder 70 bis 90°C. Die Temperatur kann beispielsweise durch Erwärmen des Bades, in welches der zu beschichtende Gegenstand eingetaucht wird, eingebracht werden. Man kann aber auch einen eingetauchten Gegenstand nachträglich erwärmen, beispielsweise mithilfe von IR-Strahlern.

In einer bevorzugten Ausführungsform der Erfindung erfolgt die Behandlung mit Hydrophobinen in Gegenwart von Mikrowellenbestrahlung. Dadurch kann die Einwirkzeit sehr stark reduziert werden. je nach Energieeintrag reichen u.U. bereits wenige Sekunden zur Abscheidung des Hydrophobins auf der Oberfläche aus.

Nach dem Beschichten wird das Lösungsmittel aus dem Schaumstoff entfernt. Bevorzugt kann der Schaumstoff zunächst ausgedrückt werden um einen Großteil des Lösemittels zu entfernen. Optional kann der Schaumstoff zuvor noch mit Wasser oder einem bevorzugt wässrigen Lösemittelgemisch gewaschen werden. Das Entfernen des Lösemittels kann beispielsweise durch einfaches Abdampfen an Luft erfolgen. Das Entfernen des Lösemittels kann aber auch durch Erhöhen der Temperatur und/oder mit geeigneten Gasströmen und/oder Anlegen eines Vakuums erleichtert werden. Das Abdampfen kann erleichtert werden, indem man beispielsweise beschichtete Gegenstände in einem Trockenschrank erwärmt oder mit einem erwärmten Gasstrom anbläst. Die Methoden können auch kombiniert werden, beispielsweise indem man in einem Umlufttrockenschrank oder einem Trockenkanal trocknet. Weiterhin kann die Beschichtung zum Entfernen des Lösemittels auch mittels Strahlung, insbesondere IR-Stahlung erwärmt werden. Hierzu können alle Arten von breitbandigen IR-Strahlern, bspw. NIR-, MIR- oder NIR-Stahler eingesetzt werden. Es können aber beispielsweise auch IR-Laser eingesetzt werden. Derartige Strahlungsquellen sind in diversen Strahlungsgeometrien kommerziell erhältlich.

Die Temperatur sowie die Trockenzeit im Zuge des Trocknens wird vom Fachmann festgelegt. Bewährt hat sich eine Trocknungstemperatur von 30 bis 130°C, bevorzugt 50 bis 120°C, besonders bevorzugt 70 bis 110°C, ganz besonders bevorzugt 75 bis 105°C und beispielsweise 85 bis 100°C. Gemeint ist hierbei die Temperatur der Beschichtung selbst. Die Temperatur in einem Trockner kann selbstverständlich auch höher sein. Die Trockenzeit ist naturgemäß umso kürzer, je höher die Trockentemperatur ist.

Die Temperaturbehandlung im Zuge des Beschichtens und die Trocknung können vorteilhaft miteinander kombiniert werden. So kann beispielsweise eine Oberfläche zunächst mit der Formulierung bei Raumtemperatur behandelt werden und anschließend bei erhöhten Temperaturen getrocknet und getempert werden. In einer bevorzugten Ausführungsform des Verfahrens wird mindestens in einem der beiden Schritte "Behandlung" oder "Trocknung" erhöhte Temperatur angewandt. Bevorzugt wird in beiden Schritten höhere Temperatur als Raumtemperatur angewandt.

Die Behandlung kann unmittelbar im Anschluss an den Herstellprozess des unmodifizierten Schaumstoffes vorgenommen werden, beispielsweise durch den Hersteller des Schaumstoffes selbst. Sie kann aber selbstverständlich auch erst zu einem späteren Zeitpunkt vorgenommen werden, beispielsweise durch einen Weiterverarbeiter oder nach dem Ausliefern des Schaumstoffes an den Endverbraucher von diesem selbst.

Durch das Behandeln des offenzelligen Schaumstoffes nach dem beschriebenen Prozess wird ein mit Hydrophobinen modifizierter, offenzelliger Schaumstoff erhalten. Durch die Modifizierung wird der offenzellige Schaumstoff hydrophober als der unmodifizierte Schaumstoff.

Überraschenderweise wird die Rohdichte des modifizierten Schaumstoffes nur unwesentlich über der des unmodifizierten Schaumstoffes liegt. Die Rohdichte des modifizierten Schaumstoffes liegt in der Regel im Bereich von 3 bis 100 kg/m³. Im Falle von Schaumstoffen auf Basis von Melamin-Formaldehyd-Harzen liegt die Rohdichte bevorzugt bei 5 bis 15 kg/m³ und besonders bevorzugt im Bereich von 8 bis 10 kg/m³.

Die Dichte des modifizierten Schaumstoffes hängt selbstverständlich von der Dichte und der inneren Oberfläche des unmodifizierten Schaumstoffes ab. In der Regel ist Dichte des mit Hydrophobin modifizierten Schaumstoffes aber nicht mehr als 10 %, bevorzugt nicht mehr als 5 % größer als die Dichte des ummodifizierten Schaumstoffes.

In einer zweiten Ausführungsform der Erfindung können die modifizierten Schaumstoffe erhalten werden, indem man die Herstellung des Schaumstoffes in Gegenwart von mindestens einem Hydrophobin vornimmt.

Im Falle der Herstellung von offenzelligen Schaumstoffen auf Basis von Melamin-Formaldehyd-Kondensationsprodukten können hierzu die Hydrophobine sowie optional weitere der oben genannten Bestandteile mit der oben erwähnten wässrigen Lösung oder Dispersion des Melamin-Formaldehyd-Vorkondensates, eines Treibmittels, eines Dispergiermittels sowie eines Härters vermischt werden. Anschließend kann die Mischung in prinzipiell bekannter Art und Weise erwärmt, verschäumt und ausgehärtet werden.

Die mit Hydrophobinen modifizierten Schaumstoffe können einerseits wie unmodifizierte Schaumstoffe eingesetzt werden, beispielsweise zur Wärme- und Schalldämmung von Gebäuden und Gebäudeteilen, zur Wärme- und Schalldämmung der Motor- und Innenräume von Fahrzeugen und Flugzeugen sowie zur Tieftemperaturisolierung, beispielsweise von Kühlhäusern, Öltanks und Behältern von Flüssiggas. Weitere Anwendungsgebiete umfassen die Verwendung als isolierende Wandverkleidung sowie als isolierendes und stoßdämmendes Verpackungsmaterial. Die durch die Modifizierung mit Hydrophobinen verringerte Wasseraufnahmefähigkeit vermindert die Beeinträchtigung der Isolierwirkung des Schaumstoffes durch Luftfeuchtigkeit. Außerdem wird verhindert, dass die Masse der Isolierung durch die Wasseraufnahme zunimmt. Dies ist besonders bei der Anwendung in Fahrzeugen und ganz besonders Flugzeugen von großer Wichtigkeit.

Der erfindungsgemäße, modifizierte offenzellige Schaumstoff weist eine deutliche größere Affinität zu unpolaren, organischen Flüssigkeiten auf. Er bietet daher auch neuartige Verwendungsmöglichkeiten im Vergleich zu den nicht modifizierten Schaumstoffen.

Er kann beispielsweise zum Aufnehmen organischer Flüssigkeiten verwendet werden. Hierzu eignen sich ganz besonders modifizierte Schaumstoffe auf Basis von Melamin-Formaldehyd-Kondensationsprodukten. Bei den organischen Flüssigkeiten kann es sich beispielsweise um nach einem Unfall ausgelaufene Treibstoffe handeln, welche durch den modifizierten Schaumstoff selektiv aufgenommen werden können. Der modifizierte Schaumstoff kann hierbei beispielsweise in Form einer Matte ausgelegt werden oder aber auch als Granulat verstreut werden. Weitere Verwendungen umfassen Leckage- und Auslaufschutz für Flüssigkeitsspeicher, wie beispielsweise Treibstofftanks, Öltanks, Tankcontainer für Tankfahrzeuge, Tankanhänger oder Tankschiffe. Die Flüssigkeitsspeicher können hierbei beispielsweise mit dem modifizierten Schaustoff umhüllt werden. In diesem Falle saugt sich bei einer Leckage oder beim Überlaufen zunächst der Schaumstoff mit der Flüssigkeit voll.

In einer bevorzugten Anwendung kann der modifizierte Schaumstoff zur Flüssig-Trennung eingesetzt werden. Hierbei werden zweiphasige flüssige Gemische voneinander getrennt, indem der Schaumstoff selektiv eine der beiden Phasen aus dem Gemisch absorbiert. Der erfindungsgemäße, modifizierte Schaumstoff kann insbesondere zur selektiven Abtrennung organischer Phasen aus zweiphasigen, wässrigorganischen Gemischen verwendet werden. Hierbei wird die organische Phase je nach Polarität ausschließlich oder zumindest bevorzugt vom modifizierten Schaumstoff aufgenommen. Bei den organischen Phasen kann es sich in einer bevorzugten Verwendung des Schaumstoffes um Ölphasen handeln. Die abgetrennte flüssige Phase kann nach dem Aufnahmen durch einfaches Auspressen wieder vom Schaumstoff getrennt werden. Der abgepresste Schaumstoff kann anschließend erneut verwendet werden.

Bei der Trennung kann es sich beispielsweise um das Abtrennen eines Ölteppichs auf einer Wasseroberfläche handeln. Der modifizierte Schaumstoff saugt sich bevorzugt mit dem Öl voll und schwimmt auch in vollgesogenem Zustand auf dem Wasser. Ein unmodifizierter Schaumstoff saugt sich bevorzugt mit Wasser voll und versinkt schließlich.

Weiterhin kann es sich um das Abtrennen von Ölresten, insbesondere Rohölresten aus wässrigen Phasen handeln. Bei der Rohölförderung fällt in der Regel ein Röhöl-Wasser-Gemisch bzw. eine Rohöl-Wasser-Emulsion an, welche zunächst unter Verwendung geeigneter Emulsionsspalter getrennt wird. Nach dem Abtrennen eines Großteils des Öls verbleibt eine wässrige Phase, in welcher noch geringe Mengen Öl, in der Regel nur noch 0,1 g/l, verteilt sind, welches sich in der Regel nur sehr schwer abtrennen lassen. Mit den erfindungsgemäßen, mit Hydrophobinen modifizierten Schaumstoffen lassen sich derartige Reste elegant abtrennen, beispielsweise indem man den modifizierten Schaumstoff in die Öl-Wasser-Mischung eintaucht. Es ist aber auch denkbar, dass man den mit Hydrophobinen modifizierten, offenzelligen Schaumstoff als Füllmaterial für eine geeignete Trennvorrichtung verwendet, beispielsweise als Füllmaterial für eine Kolonne.

Die modifizierten, offenzelligen Schaumstoffe eignen sich weiterhin dazu, bestimmte Stoffe und/oder Partikel in ihren hydrophoben Poren aufzunehmen und können daher zur Abtrennung derartiger Stoffe und/oder Partikel von der Umgebung dienen. Beispielsweise können hydrophobe Komponenten, Aerosole, Farb- und/oder Geruchsstoffe oder Pollen abgetrennt werden.

In einer weiteren, bevorzugten Verwendung können insbesondere die modifizierten Schaumstoffe auf Basis von Melamin-Formaldehyd-Kondensationsprodukten als sterilisierbares Arbeitsmittel, insbesondere für die Mikrobiologie eingesetzt werden.

Steril zu haltende Kulturröhrchen, Flaschen und Kolben werden üblicherweise mit Stopfen aus Watte, gerolltem Zellstoff oder Silikonschaum verschlossen, die einerseits Luftzutritt ermöglichen, andererseits aber als Tiefenfilter auch Luftkeime zurückhalten. Sie dürfen allerdings keinerlei Feuchtigkeit enthalten, weil sonst Mikroorganismen von der Außenseite her nach innen durchwachsen können. Erfindungsgemäß können hierzu vorteilhaft die modifizierten Schaumstoffe eingesetzt werden. Durch die erhöhte Hydrophobie wird Feuchtigkeit wirkungsvoll aus Materialien ferngehalten.

Bei dem Arbeitsmittel kann es sich beispielsweise um Stopfen handeln, mit dem Kulturröhrchen, Flaschen oder Kolben für medizinische oder mikrobiologische Arbeiten verschlossen werden. Derartige Stopfen können zur Sterilisation bei Temperaturen über 100°C behandelt. Es kann sich auch um Material zum Verschließen von Gefäßen handeln, in welchen kontaminiertes Material durch Behandlung bei Temperaturen über 100°C dekontaminiert wird.

Einzelheiten zum Durchführen von Sterilisationen sind dem Fachmann bekannt. Erfindungsgemäß modifizierte Schaumstoffe auf Basis von Melamin-Formaldehyd-Kondensationsprodukten weisen eine hohe Temperaturstabilität auf und können auch bei Temperaturen um die 180°C behandelt werden.

Die folgenden Beispiele sollen die Erfindung näher erläutern:

### Bereitstellung der Hydrophobine

Für die Beispiele wurde ein Fusions-Hydrophobin mit dem vollständigen Fusionspartner yaad eingesetzt (yaad-Xa-dewA-his; nachfolgend Hydrophobin A genannt) sowie ein Fusions-Hydrophobin mit einem auf 40 Aminosäuren verkürzten Fusionspartner yaad40-Xa-dewA-his (Hydrophobin B). Die Herstellung erfolgte gemäß der in WO 2006/082253 beschriebenen Prozedur.

Die Produkte wurden nach dem vereinfachten Reinigungsverfahren gemäß Beispiel 9 von WO 2006/82253 aufgearbeitet und gemäß Beispiel 10 derselben Schrift sprühgetrocknet. Der Gesamtproteingehalt der erhaltenen, getrockneten Produkte betrug jeweils ca. 70 bis 95 Gew. %, der Gehalt an Hydrophobinen betrug ca. 40 bis 90 Gew. % bezüglich des Gesamtproteingehaltes. Die Produkte wurden als solche für die Versuche eingesetzt.

Anwendungstechnische Prüfung: Charakterisierung der Fusions-Hydrophobine durch Kontaktwinkeländerung eines Wassertropfens auf Glas

### Substrat:

### Glas (Fensterglas, Süddeutsche Glas, Mannheim)

Für die Tests wurden die sprühgetrockneten, Fusions-Hydrophobine enthaltenden Produkte in Wasser unter Zusatz von 50 mM Na-Acetat pH 4 und 0,1 Gew. % Polyoxyethylen(20)-sorbitanmonolaureat (Tween^{®} 20) gelöst. Konzentration des Produktes: 100 µg/mL in wässriger Lösung.

Vorgehensweise:
- Inkubation von Glasplättchen über Nacht (Temperatur 80°C), danach Beschichtung waschen in destilliertem Wasser,
- danach Inkubation 10min / 80°C / 1% Natrium-Dodecylsulfat (SDS) -Lösung in dest. Wasser,
- Waschen in dest. Wasser
   Die Proben werden an der Luft getrocknet und der Kontaktwinkel (in Grad) eines Tropfens von 5 µl Wasser bei Raumtemperatur bestimmt.
   Die Kontaktwinkelmessung wurde auf einem Gerät Dataphysics Contact Angle System OCA 15+, Software SCA 20.2.0. (November 2002) bestimmt. Die Messung erfolgte gemäss den Herstellerangaben.
   Unbehandeltes Glas ergab einen Kontaktwinkel von 15° bis 30° ± 5°. Eine Beschichtung mit dem Fusions-Hydrophobin yaad-Xa-dewA-his₆ ergab eine Kontaktwinkelvergrößerung von mehr als 30°; eine Beschichtung mit dem Fusions-Hydrophobin yaad40-Xa-dewA-his ergab ebenfalls eine Kontaktwinkelvergrößerung von mehr als 30°.

### Herstellung und Charakterisierung modifizierter offenzelliger Schaumstoffe

### Beispiele 1 und 2: Nachträgliche Modifizierung

In einem Glaskolben wurden jeweils würfelförmige Proben (7cm x 7 cm x 7 cm) eines offenzelligen Melamin-Formaldehyd-Schaumstoffs mit einer Dichte von 9 kg/m³ (Basotect^{®}, BASF AG) gegeben und mit einer Lösung von 0,1 g/l Hydrophobin A bzw. Hydrophobin B getränkt. Die Lösung mit dem getränkten Schaumstoffwürfel wurde 15 h bei 60°C erwärmt. Anschließend wurde die wässrige Lösung abdekantiert. Die Schaumstoffwürfel wurden durch Auspressen vom Großteil der aufgenommenen Flüssigkeit befreit, mehrmals mit Reinstwasser gewaschen und ausgepresst und bei 40°C bis zur Gewichtskonstanz getrocknet. Die Dichte der modifizierten Schaumstoffproben ist in Tabelle 1 angegeben.

Zur Bestimmung der Wasseraufnahme wurden würfelförmige Proben von 3 cm x 3 cm x 3 cm geschnitten und bei Raumtemperatur für 30 min auf Wasser gelegt. Die Gewichtszunahme wurde gravimetrisch bestimmt und in Volumen % umgerechnet. Die Daten sind ebenfalls in Tabelle 1 angegeben.

### Vergleichsversuch 1

Es wurde die Wasseraufnahme des unmodifizierten Schaumstoffs gemäß Beispiel 1 wie oben beschrieben bestimmt. Die Daten sind in Tabelle 1 angegeben.

### Vergleichsversuch 2

Ein unmodifizierter Schaumstoff gemäß Beispiel 1 wurde zur Hydrophobierung mit Rapsöl getränkt, vollständig ausgedrückt und getrocknet. Die Gewichtszunahme und die Wasseraufnahme wurde jeweils wie oben beschrieben bestimmt. Die Daten sind in Tabelle 1 angegeben.

### Vergleichsversuch 3

Daten von Example 1 aus EP-A 633 283; es wurde ein offenzelliger Melamin-Formaldehyd-Schaumstoffs mit einer Dichte von 11 kg/m³ (Basotect ^{®}, BASF AG) nach der beschriebenen Prozedur mit Siliconöl imprägniert.

**Tabelle 1: Ergebnisse der Beispiele und Vergleichsbeispiele (*gerechnet für die Obergrenze von 9,2)**

| | Schaumstoff, modifiziert mit | Dichte [kg/m³] | Dichtezunahme [%] | Schwimmvermögen | Wasseraufnahme [Vol. %] |
|---|---|---|---|---|---|
| Beispiel 1 | Hydrophobin A | 9 - 9,2 | 2,2* | schwimmt | 0,2 - 0,5 |
| Beispiel 2 | Hydrophobin B | 9 - 9,2 | 2,2* | schwimmt | 0,3 - 0,4 |
| V1 | unmodifiziert | 9 | - | Geht unter | 95 - 100 |
| V2 | Rapsöl | >> 20 | > 120 | Geht unter | 50 - 100 |
| V3 | Siliconöl | 78 | ca. 600 | - | 25 |

Die Beispiele und Vergleichsbeispiele zeigen, dass sich der unmodifizierte, offenzellige Schaumstoff bei Verwendung von Hydrophobinen ausgezeichnet hydrophobieren lässt und dennoch nur eine minimale Zunahme der Dichte beobachtet wird.

### Beispiel 3

Modifizierung durch Zugabe von Hydrophobinen im Zuge der Schaumstoffherstellung

Die Herstellung wurde nach dem in WO 01/94436 beschriebenen Verfahren vorgenommen. Es wurden lediglich vor dem Verschäumen des treibmittelhaltigen Melamin-Formaldehyd-Vorkondensats zusätzlich 0,5 Gew.-% Hydrophobin A bezogen auf den Feststoffanteil in Form einer wässrigen Lösung zugesetzt. Die erhaltenen Schaumstoffe wurden zunächst bei 100 °C getrocknet und anschließend bei 220°C getempert. Der so hergestellte Schaumstoff sinkt beim Auflegen auf eine Wasseroberfläche nicht ein, während ein nach dem gleichen Verfahren, aber ohne Hydrophobinzusatz hergestellter Schaumstoff einsinkt.

### Variation der Beschichtungsbedingungen

In einem Glaskolben wurden jeweils quaderförmige Proben (1,5 cm x 0,5 cm x 0,3 cm ≡ 0,225 cm³) eines offenzelligen Melamin-Formaldehyd-Schaumstoffs mit einer Dichte von 9 kg/m³ (Basotect ®, BASF AG) mit jeweils 2 cm³ der zur Behandlung eingesetzten Lösung übergossen bzw. getränkt und für eine bestimmte Zeit und Temperatur behandelt. Nach der Behandlung wurden die Proben abgequetscht, gewaschen und bei 40°C bis zur Gewichtskonstanz getrocknet.

Der Grad der Hydrophobierung des modifizierten Schaumstoffes wurde jeweils bestimmt, indem bei Raumtemperatur ein Wassertropfen von 5 µl auf die Oberfläche des getrockneten, modifizierten Schaumstoffes aufgetropft wurde. Es wurde beobachtet, ob er vom Schaumstoff aufgesaugt wurde oder nicht.

### Versuchsreihe 1

In einer ersten Versuchsreiche wurde eine Beschichtungsformulierung aus Hydrophobin A in Wasser mit einem Puffer und CaCl₂-Zusatz eingesetzt (50 mmol/l Tris/HCl - Puffer, 1 mmol/l CaCl₂; pH-Wert der gepufferten Lösung: pH 8). Variiert wurde die Konzentration des Hydrophobins, die Temperatur und die Zeit variiert. Zur Kontrolle wurden jeweils Lösungen ohne Zusatz von Hydrophobin verwendet. Die Ergebnisse sind in Tabelle 2 zusammengestellt.

**Tabelle 2: Ergebnisse von Versuchsreihe 1**

| Dauer | 5 min | | | 1 h | | | 4 h | | |
|---|---|---|---|---|---|---|---|---|---|
| Konzentration Hydrophobin [mg/l] | 1 | 10 | 100 | 1 | 10 | 100 | 1 | 10 | 100 |
| 20°C | - | 0 | + | - | 0 | + | - | + | + |
| 60°C | - | + | + | - | + | + | 0 | + | + |
| 80°C | 0 | + | + | 0 | + | + | + | + | + |

| | | | | | | | | | |
|---|---|---|---|---|---|---|---|---|---|
| (Lösung: 50 mmol/l Tris-HCl-Puffer, 1 mmol/l CaCl₂; pH 8) + Tropfen sinkt nicht ein ==> hydrophobiert - Tropfen sinkt ein ==> nicht hydrophobiert 0 Tropfen sinkt teilweise / sehr langsam ein ==> teilweise hydrophobiert Ergebnis bei allen Proben ohne Hydrophobinzusatz: - | | | | | | | | | |

### Versuchsreihe 2

In einer zweiten Versuchsreiche wurde eine Beschichtungsformulierung aus Hydrophobin A in Wasser mit einem Puffer und CaCl₂-Zusatz eingesetzt (50 mmol/l Na-Acetat-Puffer, 1 mmol/l CaCl₂; pH-Wert der gepufferten Lösung: pH 5). Variiert wurde die Konzentration des Hydrophobins, die Temperatur und die Zeit variiert. Zur Kontrolle wurden jeweils Lösungen ohne Zusatz von Hydrophobin verwendet. Die Ergebnisse sind in Tabelle 3 zusammengestellt.

**Tabelle 3: Ergebnisse von Versuchsreihe 2**

| Dauer | 5 min | | | 1 h | | | 4 h | | |
|---|---|---|---|---|---|---|---|---|---|
| Konzentration Hydrophobin [mg/l] | 1 | 10 | 100 | 1 | 10 | 100 | 1 | 10 | 100 |
| 20°C | - | - | - | - | - | 0 | - | 0 | 0 |
| 60°C | - | 0 | + | - | + | + | + | + | + |
| 80°C | - | + | + | - | + | + | + | + | + |

| | | | | | | | | | |
|---|---|---|---|---|---|---|---|---|---|
| (Lösung: 50 mmol/l Na-Acetat-Puffer, 1 mmol/l CaCl₂; pH 5) + Tropfen sinkt nicht ein ==> hydrophobiert - Tropfen sinkt ein ==> nicht hydrophobiert 1 Tropfen sinkt teilweise / sehr langsam ein ==> teilweise hydrophobiert Ergebnis bei allen Proben ohne Hydrophobinzusatz: - | | | | | | | | | |

Die Ergebnisse zeigen, dass auch mit einer Konzentration von nur 1 mg/l Hydrophobin eine ausreichende Hydrophobierung zu erreichen ist, vorausgesetzt, die Beschichtungsbedingungen werden entsprechend gewählt. Es kann sowohl bei pH 8 wie auch bei pH 5 beschichtet werden, wobei pH 8 empfehlenswert ist, wenn schon bei geringen Konzenztrationen und milden Bedingungen beschichtet werden soll.

### Versuchsreihe 3

In einer dritten Versuchsreihe wurde der Einfluss von Mikrowellenstrahlung auf das Beschichtungsergebnis untersucht. Als Mikrowellenquelle wurde ein handelsübliches Haushaltsmikrowellengerät mit einer maximalen Leistung von 1000 W, einstellbar in 9 Leistungsstufen 1 bis 9 verwendet.

Zur Behandlung wurde hierzu eine Lösung (50 mmol/l Tris-HCl-Puffer, 1 mmol/l CaCl₂; pH 8) eingesetzt, welche 100 mg/l Hydrophobin A enthielt. Der unbehandelte Schaumstoff wurde zunächst wie oben beschrieben bei Raumtemperatur in die Lösung eingetaucht und getränkt und anschließend in der Mikrowelle jeweils bis zum Sieden der Behandlungslösung erhitzt. Anschließend wurde der behandelte Schaumstoff wie oben beschrieben abgepresst, gewaschen, getrocknet und wie oben im Hinblick auf den Grad der Hydrophobierung getestet. Tabelle 4 gibt die jeweils die erforderliche Zeit bis zum Sieden der Behandlungslösung an sowie das Ergebnis des Tests auf Hydrophobie.

**Tabelle 4: Ergebnisse von Versuchsreihe 3**

| Stufe | 1 | 2 | 3 | 4 | 5 | 6 | 7 | 8 | 9 |
|---|---|---|---|---|---|---|---|---|---|
| Zeit [mm:ss] | > 05:00 | 03:14 | 01:59 | 00:55 | 00:45 | 00:30 | 00:28 | 00:34 | 00:19 |
| Ergebnis | + | + | + | + | + | + | + | + | + |

| | | | | | | | | | |
|---|---|---|---|---|---|---|---|---|---|
| Alle Kontrollproben: - | | | | | | | | | |

Das Ergebnis zeigt, dass bereits ca. 20 s Mikrowellenbestrahlung bei 1000 W eine vollständige Hydrophobierung des Schaumstoffes erfolgt ist.

### Versuchsreihe 4:

### Untersuchung der Temperaturbeständigkeit der Beschichtung

Die unmodifizierten Schaumstoffe wurden zunächst wie oben beschrieben mit Hydrophobin beschichtet. Zur Behandlung wurde hierzu eine Lösung (50 mmol/l Tris-HCl-Puffer, 1 mmol/l CaCl₂; pH 8) eingesetzt, welche 1000 mg/l Hydrophobin A enthielt. Es wurde unter Verwendung des beschriebenen Mikrowellengerätes beschichtet (1 min; 200 W).

Die getrockneten modifizierten Schaumstoffe wurden danach in einem Trockenschrank bei den in Tabelle 5 aufgeführten Temperaturen und Zeiten gelagert und danach auf Hydrophobie getestet. Es wurden jeweils Kontrollproben auf gleiche Art und Weise behandelt, jedoch ohne Hydrophobin in der Behandlungslösung. Die Ergebnisse sind in Tabelle 5 aufgeführt.

**Tabelle 5: Ergebnis der Lagerversuche bei erhöhten Temperaturen**

| Zeit Temp. | 5 min | 20 min | 1 h | 2h | 4h | 8h | 24h |
|---|---|---|---|---|---|---|---|
| 100°C | + | + | + | + | + | + | + |
| 120°C | + | + | n.b. | n.b. | n.b. | n.b. | n.b. |
| 140°C | + | + | n.b. | n.b. | n.b. | n.b. | n.b. |
| 160°C | + | + | n.b. | n.b. | n.b. | n.b. | n.b. |
| 180°C | + | + | n.b. | n.b. | n.b. | n.b. | n.b. |
| 200°C | + | + | n.b. | n.b. | n.b. | n.b. | n.b. |

| | | | | | | | |
|---|---|---|---|---|---|---|---|
| Alle Kontrollproben: - ; n.b.: nicht bestimmt | | | | | | | |

Die Ergebnisse zeigen, dass die Hydrophobierung bei 100°C auch bei andauernder Temperaturbelastung erhalten bleibt; auch bei 200°C ist zumindest eine Kurzzeitbelastung unkritisch.

### Anwendung modifizierter Schaumstoffe

### Trennung von Hexan-Wasser Gemischen bzw. Benzin-Wasser-Gemischen

Für die Trennversuche wurde der gemäß Beispiel 2 hergestellte modifizierte Melamin-Formaldehyd-Schaumstoff eingesetzt (d.h. der mit Hydrophobin B modifizierte Schaumstoff).

Würfel des modifizierten Schaumstoffes (3,4 cm³) wurden jeweils mit einem zweiphasigen Gemisch aus Wasser (angefärbt mit einem wasserlöslichen Farbstoff) und einem damit nicht mischbaren organischen Lösungsmittel übergossen. Bei einem der Versuche wurde n-Hexan eingesetzt, bei dem anderen Superbenzin. Zu Vergleichszwecken wurden auch jeweils unmodifizierte Schaumstoffe in gleicher Art und Weise behandelt. Es wurde jeweils gewartet, bis der Schaumstoff mit Flüssigkeit vollgesogen war. Der unbehandelte Schaumstoff versank jeweils in der wässrigen Phase, während der behandelte Schaumstoff an der Grenzfläche zwischen organischer und wässriger Phase schwebte. Nach dem Aufsaugen wurde der Schaumstoff der Flüssigkeit entnommen, die aufgenommene Flüssigkeit abgepresst und jeweils auf ihren Anteil an organischer Phase und Wasser analysiert. Die Ergebnisse sind in Tabelle 6 zusammengestellt.

**Tabelle 6: Ergebnisse der Trennversuche; Menge der im Schaumstoff enthaltenen Flüssigkeit**

| Org. Lösemittel | Schaumstoff | Wasser [ml] | Org. Lösemittel [ml] |
|---|---|---|---|
| Benzin | unbehandelt | 3,2 | 0 |
| | behandelt | 0,1 | 3,0 |
| | | | |
| n-Hexan | unbehandelt | 3,3 | 0 |
| | behandelt | 0,1 | 3,2 |

Die Ergebnisse zeigen, dass der Schaumstoff durch die Modifizierung mit Hydrophobin vollständig "umgepolt" wird. Während der unbehandelte Schaumstoff ausschließlich Wasser aufnimmt, nimmt der behandelte Schaumstoff überwiegend organisches Lösemittel auf.

### Rückhaltevermögen für organische Lösungsmittel

Für die folgenden Versuche wurde ebenfalls der gemäß Beispiel 2 hergestellte modifizierte Melamin-Formaldehyd-Schaumstoff eingesetzt (d.h. der mit Hydrophobin B modifizierte Schaumstoff).

Würfelförmige Proben des modifizierten und des unmodifizierten Schaumstoffes wurden jeweils an einem Stab befestigt und mit verschiedene organischen Lösungsmitteln (Hexan, Xylol, Benzin) getränkt. Zur besseren Sichtbarkeit wurden die Lösungsmittel mit einem roten Farbstoff angefärbt, der gut im organischen Lösungsmittel löslich, aber in Wasser unlöslich ist. Alle Schaumstoffproben nahmen die Lösungsmittel schnell und vollständig auf. Die getränkten Proben wurden anschließend in ein mit Wasser gefülltes Gefäß gegeben und mit Hilfe des Stabes durch eine Rührbewegung im Wasser mechanisch leicht belastet.

Beim unmodifizierten Schaumstoff wurde das Lösungsmittel sofort nahezu vollständig durch Wasser verdängt, während der mit Hydrophobinen modifizierte Schaumstoff das organische Lösungsmittel nahezu vollständig im Inneren des Schaums hielt.

### Trennung von Rohöl-Wasser-Gemischen

### Herstellung einer Rohöl-Wasser-Emulsion

Für die Trennversuche wurde eine Emulsion von Rohöl (Wintershall, Emlichheim Sonde 301/83 vom 4.02.2005) in vollentsalztem Wasser hergestellt. Die Emulsion wurde durch intensives Vermischen von Wasser und Öl mit einem Ultra-Turrax vorgenommen (4 min. bei 24.000 U/min). Überschüssige Öllinsen wurden mittels Scheidetrichter entfernt. Die Ölkonzentration betrug 1000 ppm.

### Abtrennversuche

Die Emulsion wurde auf 3 Gefäße in gleichen Mengen verteilt und jeweils ein Stück eines Schaumstoffes auf Basis von Melamin-Formaldehyd-Harz eingetaucht, und zwar jeweils ein mit Hydrophobin A und mit Hydrophobin B behandelter Schaumstoff (gemäß Beispieen 1 und 2) sowie zu Vergleichszwecken eine unbehandelte Probe. Die Proben wurden jeweils 24 h in der Emulsion belassen.

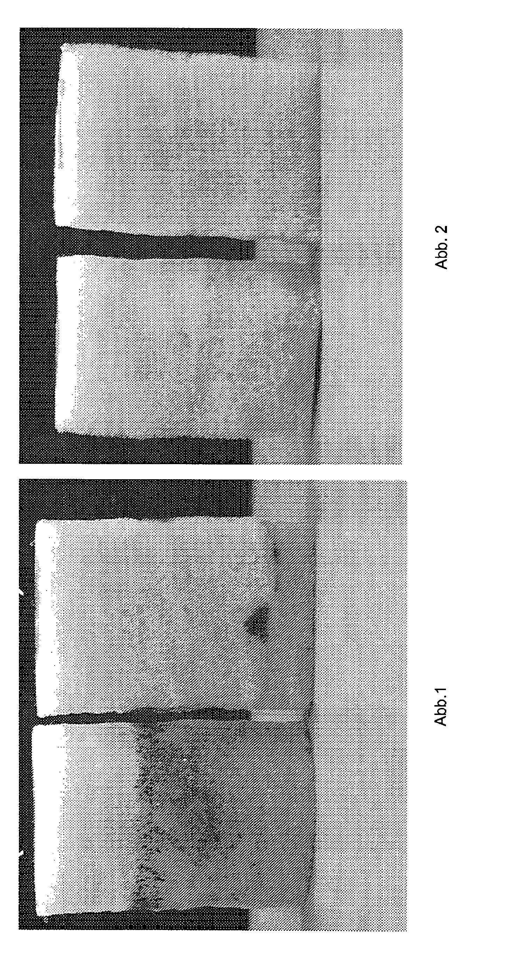

Bei den beiden modifizierten Schaumstoffen wurde jeweils eine sichtbare Menge Öl aus der Emulsion gesaugt. Der nicht behandelte Schaumstoff saugte sich mit Wasser voll, es war keine Adsorption von Öl feststellbar. Durchgeschnittene Probenkörper sind in Abbildungen 1 und 2 dargestellt.
Abbildung 1: Modifizierter Schaumstoff
Abbildung 2: Unmodifizierter Schaumstoff zum Vergleich

### Abtrennen eines Ölteppiches

Ein Gefäß wurde mit vollentsalztem Wasser gefüllt und jeweils eine dünne Schicht Rohöl (Wintershall, Landau vom 4.02.2005; dünnflüssig bei 20°C, <10% Wasser) aufgegossen.

Es wurde jeweils ein Stück eines Schaumstoffes, hergestellt gemäß Beispielen 1 und 2 sowie zu Vergleichszwecken eine unbehandelte Probe auf den Ölteppich aufgelegt.

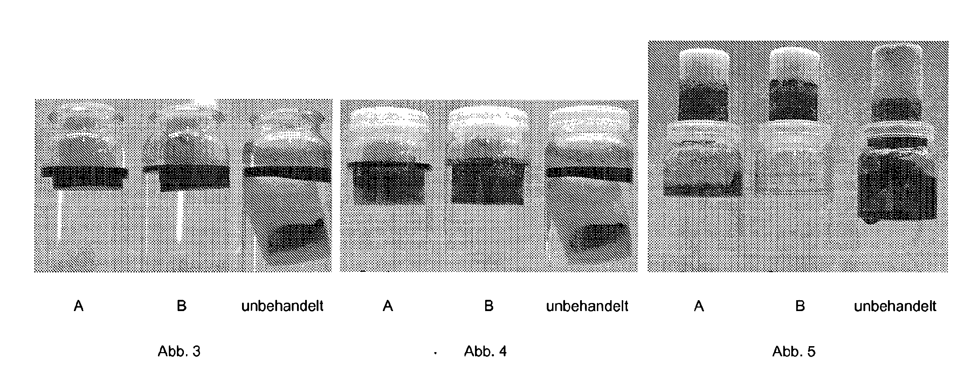

Die Abbildungen 3 bis 5 zeigen den Versuchsverlauf.
Abbildung 3: Beginn des Versuchs
Abbildung 4: Während des Versuchs
Abbildung 5: Schaumstoff nach Ende des Versuchs

Die modifizierten Schaumstoffe saugten innerhalb von 5 min nahezu den gesamten Ölteppich ein. Bei dem mit Hydrophobin B behandelten Schaumstoff wurde das Öl vollständiger abgetrennt als bei Hydrophobin A. Der nicht modifizierte Schaumstoff saugte sich im Wesentlichen mit Wasser voll. Die Ölanhaftung war nur oberflächlich. Es verblieben noch größere Mengen Öl auf der Wasseroberfläche.

## Patentansprüche

1. Offenzelliger Schaumstoff ausgewählt aus der Gruppe von Schaumstoffen auf Basis eines Melamin-Formaldehyd-Kondensationsproduktes, eines Polyurethans oder eines Polyimids, **dadurch gekennzeichnet, dass** der Schaumstoff mit mindestens einem Hydrophobin modifiziert ist.

2. Offenzelliger Schaumstoff gemäß Anspruch 1, **dadurch gekennzeichnet, dass** der Schaumstoff eine mit Dichte von 3 bis 100 kg/m³ aufweist.

3. Offenzelliger Schaumstoff gemäß Anspruch 1 oder 2, **dadurch gekennzeichnet, dass** es sich um einen Schaumstoff auf Basis eines Melamin-Formaldehyd-Kondensationsproduktes handelt.

4. Offenzelliger Schaumstoff nach Anspruch 3, **dadurch gekennzeichnet, dass** das Molverhältnis Melamin/Formaldehyd 1 : 1 bis 1 : 5 beträgt.

5. Offenzelliger Schaumstoff gemäß einem der Ansprüche 3 bis 5, **dadurch gekennzeichnet, dass** die Menge an Hydrophobin 5 bis 10 g / m³ Schaumstoff beträgt.

6. Verfahren zur Herstellung eines modifizierten, offenzelligen Schaumstoffes gemäß einem der Ansprüche 1 bis 5, **dadurch gekennzeichnet, dass** man einen unmodifizierten offenzelligen Schaumstoff mit einer wässrigen Lösung eines Hydrophobins behandelt.

7. Verfahren gemäß Anspruch 6, **dadurch gekennzeichnet, dass** man die Behandlung bei einer Temperatur von 20 bis 120°C vornimmt.

8. Verfahren gemäß Anspruch 6, **dadurch gekennzeichnet, dass** man unter Erwärmen behandelt, und man die Erwärmung mittels Mikrowellenbestrahlung vornimmt.

9. Verfahren gemäß einem der Ansprüche 6 bis 8, **dadurch gekennzeichnet, dass** die Konzentration des mindestens einen Hydrophobins in der wässrigen Lösung 0,1 µg/ml bis 1000 µg/ml beträgt.

10. Verfahren zur Herstellung eines modifizierten, offenzelligen Schaumstoffes gemäß einem der Ansprüche 1 bis 5, **dadurch gekennzeichnet, dass** man die Herstellung des offenzelligen Schaumstoffes in Gegenwart mindestens eines Hydrophobins vornimmt.

11. Verfahren gemäß Anspruch 10, **dadurch gekennzeichnet, dass** es sich um ein Verfahren zur Herstellung eines modifizierten, offenzelligen Schaumstoffes auf Basis eines Melamin-Formaldehyd-Kondensationsproduktes handelt, bei dem man eine mindestens ein Melamin-Formaldehyd (MF)-Vorkondensat, ein Dispergiermittel, einen Härter sowie ein Treibmittel umfassende Mischung unter Erwärmen aufschäumt und härtet, und die Herstellung in Gegenwart mindestens eines Hydrophobins vornimmt.

12. Verfahren nach Anspruch 11, **dadurch gekennzeichnet, dass** das Molverhältnis Melamin/Formaldehyd des Vorkondensates im Bereich von 1 : 1 bis 1 : 5 liegt.

13. Verwendung des modifizierten, offenzelligen Schaumstoffes nach einem der Ansprüche 1 bis 5 als Dämmmaterial.

14. Verwendung des modifizierten, offenzelligen Schaumstoffes nach einem der Ansprüche 1 bis 5 als zur Schall- und/oder Wärmedämmung in Flugzeugen.

15. Verwendung des modifizierten, offenzelligen Schaumstoffes nach einem der Ansprüche 1 bis 5 zum Aufnehmen organischer Flüssigkeiten.

16. Verwendung des modifizierten, offenzelligen Schaumstoffes nach einem der Ansprüche 1 bis 5 als Leckage- und Auslaufschutz für Flüssigkeitsspeicher.

17. Verwendung des modifizierten, offenzelligen Schaumstoffes nach einem der Ansprüche 1 bis 5 zur Flüssig-Flüssig-Trennung.

18. Verwendung gemäß Anspruch 15, **dadurch gekennzeichnet, dass** es sich um die Abtrennung von Öl aus einem Öl-Wasser-Gemisch handelt.

19. Verwendung des modifizierten, offenzelligen Schaumstoffes nach einem der Ansprüche 1 bis 5 als sterilisierbares Arbeitsmittel.

20. Verwendung gemäß einem der Ansprüche 13 bis 19, **dadurch gekennzeichnet, dass** es sich um modifizierten, offenzelligen Schaumstoffes auf Basis eines Melamin-Formaldehyd-Kondensationsproduktes handelt.

## Claims

1. An open-cell foam selected from the group of foams based on a melamine-formaldehyde condensation product, a polyurethane or a polyimide, wherein the foam has been modified with at least one hydrophobin.

2. The open-cell foam according to claim 1, wherein the foam has a with density of from 3 to 100 kg/m³.

3. The open-cell foam according to claim 1 or 2, wherein it is a foam based on a melamine-formaldehyde condensation product.

4. The open-cell foam according to claim 3, wherein the melamine/formaldehyde molar ratio is 1:1 to 1:5.

5. The open-cell foam according to one of claims 3 to 5, wherein the amount of hydrophobin is 5 to 10 g/m³ of foam.

6. A method of producing a modified, open-cell foam according to one of claims 1 to 5, wherein an unmodified, open-cell foam is treated with an aqueous solution of a hydrophobin.

7. The method according to claim 6, wherein the treatment is undertaken at a temperature of from 20 to 120°C.

8. The method according to claim 6, wherein treatment takes place with heating, and the heating is undertaken by means of microwave irradiation.

9. The method according to one of claims 6 to 8, wherein the concentration of the at least one hydrophobin in the aqueous solution is 0.1 □g/ml to 1000 □g/ml.

10. A method of producing a modified, open-cell foam according to one of claims 1 to 5, wherein the production of the open-cell foam is undertaken in the presence of at least one hydrophobin.

11. The method according to claim 10, wherein it is a method of producing a modified, open-cell foam based on a melamine-formaldehyde condensation product, in which a mixture comprising at least one melamine-formaldehyde (MF) precondensate, a dispersant, a curing agent, and a propellant is foamed with heating and cured, and the production is undertaken in the presence of at least one hydrophobin.

12. The method according to claim 11, wherein the melamine/formaldehyde molar ratio of the precondensate is in the range from 1:1 to 1:5.

13. The use of the modified, open-cell foam according to one of claims 1 to 5 as insulating material.

14. The use of the modified, open-cell foam according to one of claims 1 to 5 as for noise and/or thermal insulation in aeroplanes.

15. The use of the modified, open-cell foam according to one of claims 1 to 5 for absorbing organic liquids.

16. The use of the modified, open-cell foam according to one of claims 1 to 5 as leakage and bleeding protection for liquid stores.

17. The use of the modified, open-cell foam according to one of claims 1 to 5 for liquid-liquid separation.

18. The use according to claim 15, wherein it is the separation of oil from an oil-water mixture.

19. The use of the modified, open-cell foam according to one of claims 1 to 5 as sterilizable work material.

20. The use according to one of claims 13 to 19, wherein it is a modified, open-cell foam based on a melamine-formaldehyde condensation product.

## Revendications

1. Mousse à cellules ouvertes choisie dans le groupe des mousses à base d'un produit de condensation mélamine-formaldéhyde, d'un polyuréthane ou d'un polyimide, **caractérisé en ce que** la mousse est modifiée avec au moins une hydrophobine.

2. Mousse à cellules ouvertes selon la revendication 1, **caractérisée en ce que** la mousse présente une densité de 3 à 100 kg/m³.

3. Mousse à cellules ouvertes selon la revendication 1 ou 2, **caractérisée en ce qu'**il s'agit d'une mousse à base d'un produit de condensation mélamine-formaldéhyde.

4. Mousse à cellules ouvertes selon la revendication 3, **caractérisée en ce que** le rapport molaire mélamine/formaldéhyde vaut 1:1 à 1:5.

5. Mousse à cellules ouvertes selon l'une quelconque des revendications 3 à 5, **caractérisée en ce que** la quantité d'hydrophobine est de 5 à 10 g/m³ de mousse.

6. Procédé pour la préparation d'une mousse à cellules ouvertes, modifiée, selon l'une quelconque des revendications 1 à 5, **caractérisé en ce qu'**on traite une mousse à cellules ouvertes non modifiée avec une solution aqueuse d'une hydrophobine.

7. Procédé selon la revendication 6, **caractérisé en ce qu'**on réalise le traitement à une température de 20 à 120°C.

8. Procédé selon la revendication 6, **caractérisé en ce qu'**on traite en chauffant et on réalise le chauffage au moyen d'une irradiation par des micro-ondes.

9. Procédé selon l'une quelconque des revendications 6 à 8, **caractérisé en ce que** la concentration de ladite au moins une hydrophobine dans la solution aqueuse est de 0,1 µg/ml à 1000 µg/ml.

10. Procédé pour la préparation d'une mousse à cellules ouvertes, modifiée, selon l'une quelconque des revendications 1 à 5, **caractérisé en ce qu'**on réalise la préparation de la mousse à cellules ouvertes en présence d'au moins une hydrophobine.

11. Procédé selon la revendication 10, **caractérisé en ce qu'**il s'agit d'un procédé pour la préparation d'une mousse à cellules ouvertes, modifiée, à base d'un produit de condensation de mélamine-formaldéhyde, dans lequel on mousse et durcit, en chauffant, un mélange comprenant au moins un produit de précondensation de mélamine-formaldéhyde (MF), un dispersant, un durcisseur ainsi qu'un agent gonflant et on réalise la préparation en présence d'au moins une hydrophobine.

12. Procédé selon la revendication 11, **caractérisé en ce que** le rapport molaire mélamine/formaldéhyde du produit de précondensation se situe dans la plage de 1:1 à 1:5.

13. Utilisation de la mousse à cellules ouvertes, modifiée, selon l'une quelconque des revendications 1 à 5 comme matériau isolant.

14. Utilisation de la mousse à cellules ouvertes, modifiée, selon l'une quelconque des revendications 1 à 5 pour l'isolation acoustique et/ou thermique dans des avions.

15. Utilisation de la mousse à cellules ouvertes, modifiée, selon l'une quelconque des revendications 1 à 5 pour absorber des liquides organiques.

16. Utilisation de la mousse à cellules ouvertes, modifiée, selon l'une quelconque des revendications 1 à 5 comme protection contre les fuites et le coulage pour des réservoirs pour liquides.

17. Utilisation de la mousse à cellules ouvertes, modifiée, selon l'une quelconque des revendications 1 à 5 pour la séparation liquide-liquide.

18. Utilisation selon la revendication 15,
**caractérisée en ce qu'**il s'agit de la séparation d'huile d'un mélange huile-eau.

19. Utilisation de la mousse à cellules ouvertes, modifiée, selon l'une quelconque des revendications 1 à 5 comme moyen de travail stérilisable.

20. Utilisation selon l'une quelconque des revendications 13 à 19, **caractérisée en ce qu'**il s'agit d'une mousse à cellules ouvertes, modifiée, à base d'un produit de condensation mélamine-formaldéhyde.
